# EUROPÄISCHE PATENTSCHRIFT

(11) **EP 3 665 445 B1**
(45) Veröffentlichungstag und Bekanntmachung des Hinweises auf die Patenterteilung: **18.01.2023**
(21) Anmeldenummer: 18740800.0
(22) Anmeldetag: 12.07.2018
(51) Int. Cl.: G01N 11/16, H01F 5/04, H01F 27/06, G01F 1/84, H01F 5/02, H01F 5/06, H01B 3/12

(54) **SPULE SOWIE MESSWANDLER MIT EINER SOLCHEN SPULE**
COIL AND TRANSDUCER HAVING SUCH A COIL
BOBINE ET TRANSDUCTEUR DOTÉ D'UNE TELLE BOBINE

(30) Priorität: 09.08.2017 DE 102017118108; 13.09.2017 DE 102017121157
(43) Veröffentlichungstag der Anmeldung: 17.06.2020
(73) Patentinhaber: Endress+Hauser Flowtec AG, 4153 Reinach (CH)
(72) Erfinder: SCHWENTER, Benjamin, 4226 Breitenbach (CH); HOLLINGER, Claude, 4147 Aesch (CH); WERNER, Marc, 79639 Grenzach-Wyhlen (DE); STUCKI, Martin, 4133 Pratteln (CH)
(74) Vertreter: Hahn, Christian
(86) Internationale Anmeldenummer: PCT/EP2018/068895
(87) Internationale Veröffentlichungsnummer: WO 2019/029941

(56) Entgegenhaltungen:
- EP-A2- 0 364 054
- US-A- 2 982 888
- US-A- 3 223 553
- US-A- 3 308 414
- US-A- 5 374 810
- US-A1- 2004 221 661

## Beschreibung

Die Erfindung betrifft eine, für die Verwendung in einen Meßwandler vom Vibrationstyp, nicht zuletzt auch zur Bildung eines Schwingungserregers und/oder eines Schwingungssensors geeignete, Spule. Ferner betrifft die Erfindung einen eine solche Spule aufweisenden Meßwandler vom Vibrationstyp.

In der industriellen Meßtechnik werden, insb. auch im Zusammenhang mit der Regelung und Überwachung von automatisierten verfahrenstechnischen Prozessen, zur hochgenauen Ermittlung einer oder mehrerer Meßgrößen, insb. einer Massendurchflußrate, einer Dichte und/oder einer Viskosität, einer in einer Prozeßleitung, beispielsweise einer Rohrleitung, strömenden Mediums, beispielsweise einer Flüssigkeiten oder eines Gases, oftmals jeweils mittels einer - zumeist mittels wenigstens einen Mikroprozessors gebildeten - Meßgerät-Elektronik sowie einem mit nämlicher Meßgerät-Elektronik elektrisch verbundenen, im Betrieb vom zu messenden Medium durchströmten Meßwandler vom Vibrationstyp gebildete vibronische Meßgeräte verwendet. Solche - beispielsweise als sogenannte Vierleiter- oder auch als sogenannte Zweileitergeräte ausgebildete - Meßgeräte sind seit langem bekannt, nicht zuletzt auch ingestalt von Coriolis-Massendurchfluß-/Dichte-Meßgeräten oder auch ingestalt von Viskositäts-Dichte-Meßgeräten, und im industriellen Einsatz etabliert. Beispiele für solche vibronischen Meßgeräte bzw. dafür geeignete Meßwandler sind u.a. in der US-A 2002/0157480, der US-A 2004/0123645, der US-A 2004/0221661, der US-A 2006/0081069, der US-A 2006/0096390, der US-A 2007/0062309, der US-A 2007/0119264, der US-A 2008/0047362, der US-A 2008/0190195, der US-A 2008/0250871, der US-A 2010/0005887, der US-A 2010/0011882, der US-A 2010/0257943, der US-A 2011/0161017, der US-A 2011/0219872, der US-A 2011/0265580, der US-A 2012/0123705, der US-A 2013/0042700, der US-A 2016/0313162, der US-A 44 91 009, der US-A 45 24 610, der US-A 47 56 198, der US-A 47 77 833, der US-A 48 01 897, der US-A 48 76 898, der US-A 49 96 871, der US-A 52 87 754, der US-A 52 91 792, der US-A 53 49 872, der US-A 55 31 126, der US-A 57 05 754, der US-A 57 96 010, der US-A 57 96 011, der US-A 58 31 178, der US-A 59 45 609, der US-A 59 65 824, der US-A 60 06 609, der US-A 60 92 429, der US-B 62 23 605, der US-B 63 11 136, der US-B 64 77 901, der US-B 65 13 393, der US-B 66 51 513, der US-B 66 66 098, der US-B 67 11 958, der US-B 68 40 109, der US-B 69 20 798, der US-B 70 17 424, der US-B 70 77 014, der US-B 72 00 503, der US-B 72 16 549, der US-B 73 25 462, der US-B 73 60 451, der US-B 77 92 646, der WO-A 00/34748, der WO-A 01/02 816, der WO-A 2007/043996, der WO-A 2008/059262, der WO-A 2013/092104, der WO-A 85/05677, der WO-A 88/02853, der WO-A 89/00679, der WO-A 94/21999, der WO-A 95/03528, der WO-A 95/16897, der WO-A 95/29385, der WO-A 98/02725, der WO-A 99/40394, oder der US 3 308 414 A beschrieben.

Der Meßwandler eines jeden der darin gezeigten Meßgeräte umfaßt wenigstens ein zumindest abschnittsweise gerades und/oder zumindest abschnittsweise gekrümmtes, z.B. U-, V-, S-, Z- oder Ω-artig geformtes, Meßrohr mit einem von einer Rohrwand umgebenen Lumen zum Führen des Mediums.

Das wenigstens eine Meßrohr eines solchen Meßwandlers ist dafür eingerichtet, im Lumen Medium zu führen und währenddessen so vibrieren gelassen zu werden, daß es Nutzschwingungen, nämlich mechanische Schwingungen um eine Ruhelage mit einer auch von der Dichte des Mediums mitbestimmten, mithin als Maß für die Dichte verwendbaren Nutzfrequenz ausführt. Bei herkömmlichen vibronischen Meßgeräten dienen typischerweise Biegeschwingungen auf einer natürlichen Resonanzfrequenz als Nutzschwingungen, beispielsweise solche Biegeschwingungen, die einem dem Meßwandler immanenten natürlichen Biegeschwingungsgrundmode entsprechen, in dem die Schwingungen des Meßrohrs solche Resonanzschwingungen sind, die genau einen Schwingungsbauch aufweisen. Die Nutzschwingungen sind bei einem zumindest abschnittsweise gekrümmtem Meßrohr zudem typischerweise so ausgebildet, daß das nämliches Meßrohr um eine ein einlaßseitiges und ein außlaßseitiges Ende des Meßrohrs imaginär verbindenden gedachte Schwingungsachse nach Art eines an einem Ende eingespannten Auslegers pendelt, während hingegen bei Meßwandlern mit einem geraden Meßrohr die Nutzschwingungen zumeist Biegeschwingungen in einer einzigen gedachten Schwingungsebene sind. Es ist zudem bekannt, das wenigstens eine Meßrohr zwecks Durchführung wiederkehrender Überprüfungen des Meßwandlers während des Betriebs des Meßgerät gelegentlich auch zu zeitlich andauernden Schwingungen außer Resonanz anzuregen sowie nämliche Schwingungen außer Resonanz auszuwerten, beispielsweise um, wie in der vorgenannten US-A 2012/0123705 beschrieben, allfällige Beschädigungen des wenigstens einen Meßrohrs möglichst frühzeitig zu detektieren, die eine unerwünschte Verringerung der Meßgenauigkeit und/oder der Betriebssicherheit des jeweiligen Meßgerät bewirken können.

Bei Meßwandlern mit zwei Meßrohren sind diese zumeist über ein sich zwischen den Meßrohren und einem einlaßseitigen Anschlußflansch erstreckenden einlaßseitig Verteilerstück sowie über ein sich zwischen den Meßrohren und einem auslaßseitigen Anschlußflansch erstreckenden auslaßseitig Verteilerstück in die jeweilige Prozeßleitung eingebunden. Bei Meßwandlern mit einem einzigen Meßrohr kommuniziert letzteres zumeist über ein einlaßseitig einmündendes Verbindungsrohr sowie über ein auslaßseitig einmündendes Verbindungsrohr mit der Prozeßleitung. Ferner umfassen Meßwandler mit einem einzigen Meßrohr jeweils wenigstens einen einstückigen oder mehrteilig ausgeführten, beispielsweise rohr-, kasten- oder plattenförmigen, Gegenschwinger, der unter Bildung einer ersten Kopplungszone einlaßseitig an das Meßrohr gekoppelt ist und der unter Bildung einer zweiten Kopplungszone auslaßseitig an das Meßrohr gekoppelt ist, und der im Betrieb im wesentlichen ruht oder entgegengesetzt zum Meßrohr oszilliert. Das mittels Meßrohr und Gegenschwinger gebildete Innenteil des Meßwandlers ist zumeist allein mittels der zwei Verbindungsrohre, über die das Meßrohr im Betrieb mit der Prozeßleitung kommuniziert, in einem schutzgebenden Meßwandler-Gehäuse gehaltert, insb. in einer Schwingungen des Innenteil relativ zum Meßwandler-Gehäuse ermöglichenden Weise. Bei den beispielsweise in der US-A 52 91 792, der US-A 57 96 010, der US-A 59 45 609, der US-B 70 77 014, der US-A 2007/0119264, der WO-A 01/02 816 oder auch der WO-A 99/40 394 gezeigten Meßwandlern mit einem einzigen, im wesentlichen geraden Meßrohr sind letzteres und der Gegenschwinger, wie bei herkömmlichen Meßwandlern durchaus üblich, zueinander im wesentlichen koaxial ausgerichtet, indem der Gegenschwinger als im wesentlichen gerader Hohlzylinder ausgebildet und im Meßwandler so angeordnet ist, daß das Meßrohr zumindest teilweise vom Gegenschwinger ummantelt ist. Als Materialien für solche Gegenschwinger kommen, insb. auch bei Verwendung von Titan, Tantal oder Zirkonium für das Meßrohr, zumeist vergleichsweise kostengünstige Stahlsorten, wie etwa Baustahl oder Automatenstahl, zum Einsatz.

Zum aktiven Anregen bzw. Aufrechterhalten von Schwingungen des wenigstens einen Meßrohrs, nicht zuletzt auch den Nutzschwingungen, weisen Meßwandler vom Vibrationstyp des weiteren eine mittels wenigstens eines im Betrieb differentiell auf das wenigstens eine Meßrohr und den ggf. vorhandenen Gegenschwinger bzw. das ggf. vorhandene andere Meßrohr einwirkenden elektromechanischen Schwingungserreger auf. Der mittels eines Paars elektrischer Anschlußleitungen, beispielsweise inform von Anschlußdrähten und/oder inform von Leiterbahnen einer flexiblen Leiterplatte, mit der erwähnten Meßgerät-Elektronik elektrisch verbundene Schwingungserreger dient im besonderen dazu, angesteuert von einem von der Meßgerät-Elektronik generierten und entsprechend konditionierten, nämlich zumindest an sich verändernde Schwingungseigenschaften des wenigstens einen Meßrohrs angepaßten elektrischen Erregersignal, eine mittels nämlichen Erregersignals eingespeiste elektrische Erregerleistung in eine an einem vom Schwingungserreger gebildeten Angriffspunkt auf das wenigstens eine Meßrohr wirkende Antriebskraft zu wandeln.

Schwingungserreger marktgängiger Meßwandler vom Vibrationstyp sind typischerweise nach Art einer nach dem elektrodynamischen Prinzip arbeitenden Schwingspule aufgebaut, nämlich mittels einer - bei Meßwandlern mit einem Meßrohr und einem daran gekoppelten Gegenschwinger zumeist an letzterem fixierten - Spule sowie einen mit der wenigstens einen Spule wechselwirkenden als Anker dienenden Permanentmagneten gebildet, der entsprechend am zu bewegenden Meßrohr fixiert ist. Der Permanentmagnet und die Spule sind dabei üblicherweise so ausgerichtet, daß sie zueinander im wesentlichen koaxial verlaufen. Zudem ist bei herkömmlichen Meßwandlern der Schwingungserreger zumeist so ausgebildet und plaziert, daß er im wesentlichen mittig an das wenigstens eine Meßrohr angreift. Alternativ zu einem eher zentral und direkt auf das Meßrohr wirkenden Schwingungserreger können, wie u.a. in der eingangs erwähnten US-A 60 92 429, beispielsweise auch mittels zweier nicht im Zentrum des Meßrohres, sondern eher ein- bzw. auslaßseitig an diesem fixierten Schwingungserreger zum aktiven Anregung mechanischer Schwingungen des wenigstens einen Meßrohrs verwendet werden oder, wie u.a. in der US-B 62 23 605 oder der US-A 55 31 126 vorgeschlagen, beispielsweise auch mittels eines zwischen dem ggf. vorhandenen Gegenschwinger und dem Meßwandler-Gehäuse wirkenden Schwingungserreger gebildete Erregeranordnungen verwendet werden.

Zum Erfassen von Schwingungsbewegungen des wenigstens einen Meßrohrs, nicht zuletzt auch den den Nutzschwingungen entsprechenden, weisen Meßwandler der in Rede stehenden Art ferner wenigstens einen am Meßrohr plazierten, beispielsweise mittels eines eigenen Paars elektrischer Anschlußleitungen mit der Meßgerät-Elektronik elektrisch verbundenen, Schwingungssensor auf, der dafür eingerichtet ist, nämliche Schwingungsbewegungen in ein diese repräsentierendes Schwingungsmeßsignal zu wandeln, das eine der Nutzfrequenz entsprechenden Signalfrequenz enthält, und nämliches Schwingungsmeßsignal der Meßgerät-Elektronik, beispielsweise nämlich einer mittels wenigstens eines Mikroprozessors gebildeten Meß- und Betriebsschaltung der Meßgerät-Elektronik, zur weiteren Verarbeitung zur Verfügung zu stellen. Bei Meßwandlern von marktgängigen vibronischen Dichte-Meßgeräten sind die Schwingungssensoren zumeist ebenfalls vom elektrodynamischen Typ, mithin nach Art einer Tauchspule aufgebaut. Dementsprechend sind auch die Schwingungssensoren einer solchen Sensoranordnung zumeist ebenfalls jeweils mittels eines am Meßrohr fixierten Permanentmagneten und wenigstens einer - beispielsweise am ggf. vorhanden anderen Meßrohr oder am ggf. vorhandenen Gegenschwinger fixierten - von einem Magnetfeld des Dauermagneten durchsetzten Spule gebildet, die infolge der Schwingungsbewegungen des wenigstens einen Meßrohrs zumindest zeitweise mit einer induzierten Meßspannung beaufschlagt ist.

Aufgrund der Nutzschwingungen des wenigstens einen Meßrohrs, können - nicht zuletzt auch für den Fall, daß die Nutzschwingungen des wenigstens einen Meßrohrs Biegeschwingungen sind - im strömenden Medium bekanntlich auch von der momentanen Massendurchflußrate abhängige Corioliskräfte induziert werden. Diese wiederum können von der Massendurchflußrate abhängige, sich den Nutzschwingungen überlagernde Coriolisschwingungen mit Nutzfrequenz bewirken, derart, daß zwischen einlaßseitigen und auslaßseitigen Schwingungsbewegungen des Nutzschwingungen ausführenden und zugleich vom Medium durchströmten wenigstens einen Meßrohrs eine auch von der Massedurchflußrate abhängige, mithin auch als Maß für die Massendurchflußmessung nutzbare Laufzeit- bzw. Phasendifferenz detektiert werden kann. Bei einem zumindest abschnittsweise gekrümmtem Meßrohr, bei dem für die Nutzschwingungen eine Schwingungsform, in der nämliches Meßrohr nach Art eines an einem Ende eingespannten Auslegers pendeln gelassen wird, gewählt ist, entsprechen die resultierenden Coriolisschwingungen beispielsweise jenem - gelegentlich auch als Twist-Mode bezeichneten - Biegeschwingungsmode, in dem das Meßrohr Drehschwingungen um eine senkrecht zur erwähnten gedachten Schwingungsachse ausgerichtete gedachte Drehschwingungsachse ausführt, wohingegen bei einem geraden Meßrohr, dessen Nutzschwingungen als Biegeschwingungen in einer einzigen gedachten Schwingungsebene ausgebildet sind, die Coriolisschwingungen beispielsweise als zu den Nutzschwingungen im wesentlichen koplanare Biegeschwingungen sind. Für den eingangs bereits erwähnten Fall, daß mittels des Meßgerät zusätzlich zur Dichte zudem auch die Massendurchflußrate des jeweils im Meßwandler geführten Mediums ermittelt werden soll, weisen Meßwandler der in Rede stehenden Art zwecks des Erfassens sowohl einlaßseitiger als auch auslaßseitiger Schwingungsbewegungen des wenigstens einen Meßrohrs und zum Erzeugen wenigstens zweier von der zu messenden Massendurchflußrate beeinflußten elektrischen Schwingungsmeßsignalen desweiteren zumeist zwei oder mehr entlang des Meßrohrs voneinander beabstandete Schwingungssensoren auf, die so ausgestaltet und angeordnet sind, daß die damit generierten und an die Meßgerät-Elektronik geleitete Schwingungsmeßsignale nicht nur, wie bereits erwähnt, jeweils eine Nutzsignalkomponente aufweisen, sondern daß zudem auch zwischen den Nutzsignalkomponenten beider Schwingungsmeßsignale eine von der Massendurchflußrate abhängige Laufzeit- bzw. Phasendifferenz meßbar ist. Alternativ oder in Ergänzung zur Messung auch der Massendurchflußrate zusätzlich zur Messung der Dichte ist es - wie bereits erwähnt bzw. u.a. in der eingangs erwähnten US-A 2011/0265580 gezeigt - zudem auch möglich, mittels solcher Meßwandler vom Vibrationstyp, mithin mittels damit gebildeten vibronischen Dichte-Meßgeräten zusätzlich auch eine Viskosität des hindurchströmenden Mediums direkt zu messen, beispielsweise basierend auf einer für die Anregung bzw. Aufrechterhaltung der Nutzschwingungen erforderlichen elektrischen Erregerleistung bzw. basierend auf einer anhand der Erregerleistung ermittelten Dämpfung der Nutzschwingungen, und inform qualifizierter Viskositäts-Meßwerte auszugeben.

Eine bei einem Meßwandler der in Rede stehenden Art - beispielsweise zu Bildung eines Schwingungserregers oder eines Schwingungssensors - verwendete Spule weist - wie u.a. auch in der erwähnten US-A 2016/0313162 gezeigt - typischerweise einen, beispielsweise aus einem Kunststoff und/oder aus einer Keramik und/oder einem Metall bestehenden, Spulenträger mit einer sich von einem durch eine erste Stirnfläche gebildeten ersten Ende des Spulenträgers bis zu einem zu nämlichem ersten Ende distalen, durch eine, insb. zu nämlicher ersten Stirnfläche parallele, zweite Stirnfläche gebildeten zweiten Ende des Spulenträgers erstreckenden geraden Durchgangsöffnung. Um nämlichen Spulenträger ist ein, beispielsweise mit einer elektrisch isolierenden Lackschicht überzogener, Spulen-Draht aus einem elektrisch leitfähigen Material, beispielsweise einem Edel-Metall, wie Gold, Silber und/oder Platin bzw. einer Legierung davon, gewickelt. Die Endmontage eines solchen Spule erfolgt typischerweise, indem der den Spulen-Draht tragende Spulenträger am Gegenschwinger bzw. am Meßrohr des jeweiligen Meßwandlers unter Verwendung einer in der Durchgangsöffnung des Spulenträgers positionierten Schraube montiert und hernach, mithin bei bereits in Einbaulage befindlicher Spule jede der beiden Anschlußleitung mit jeweils einem - zunächst noch freien - Ende des Spulen-Drahts elektrisch leitend verbunden, beispielsweise nämlich manuell verlötet, wird.

Ein die Anwendungsbereiche für Meßwandler der vorbeschriebenen Art limitierender Faktor ist eine Betriebstemperatur, der die jeweiligen Spulen ausgesetzt werden können. In der eingangs erwähnten US-A 2004/0221661 ist u.a. eine entsprechend geeignete Spule beschrieben, die zur Realisierung höherer Betriebstemperaturen eine den auf den Spulenkörper gewickelten Spulendraht überziehende, aus einem hochtemperaturfesten keramischen und/oder glasartigen Material bestehende Schutzschicht und ein in den Spulenkörper eingeformtes Außengewinde, in das der Spulendraht eingelegt ist, aufweist. Durch Verwendung einer solchen Spule konnten bislang allerdings lediglich Betriebstemperaturen von bis ca. 300 C realisiert werden.

Eine Aufgabe der Erfindung besteht darin, Spulen der vorgenannten Art dahingehend zu verbessern, daß eine Verwendung auch für Betriebstemperaturen von über 350°C, insb. auch von über 400°C, ermöglicht ist.

Zur Lösung der Aufgabe besteht die Erfindung in einer Spule nach Anspruch 1, ausgeführt für einen Meßwandler vom Vibrationstyp, umfassend:
- einen Spulenträger;
- einen zumindest teilweise von einer Isolierschicht umhüllten und um den Spulenträger gewickelten Spulen-Draht;
- sowie eine den um den Spulenträger gewickelten Spulen-Draht zumindest teilweise abdeckende Schutzschicht;
- wobei der Spulen-Draht zumindest anteilig aus Silber oder einer Silber-Legierung besteht;
- wobei die den Spulen-Draht umhüllende Isolierschicht zumindest anteilig aus einem keramischen Material besteht;
- und wobei die Schutzschicht zumindest anteilig aus einem keramischen Material oder Glas besteht.

Darüberhinaus besteht die Erfindung ferner auch in einem Meßwandler vom Vibrationstyp, umfassend:
- wenigstens ein, beispielsweise zumindest abschnittsweise gerades und/oder zumindest abschnittsweise gekrümmtes, Meßrohr, das ein von einer Rohrwand umgebenes Lumen aufweist und dafür eingerichtet ist, in einem Lumen ein fließfähiges Medium, beispielsweise eine Gas und/oder eine Flüssigkeit, zu führen und währenddessen vibrieren gelassen zu werden, beispielsweise derart, daß nämliches Metallrohr mechanischen Schwingungen um eine diesem zugehörige statische Ruhelage ausführt, die geeignet sind, im strömenden Medium von einer Massendurchflußrate abhängige Corioliskräfte zu induzieren, und/oder daß nämliches Metallrohr mechanischen Schwingungen um eine diesem zugehörige statische Ruhelage ausführt, die geeignet sind, im strömenden Medium von einer Viskosität nämlichen Mediums abhängige Reibungskräfte zu induzieren, und/oder daß nämliches Metallrohr mechanischen Schwingungen um eine diesem zugehörige statische Ruhelage ausführt, die geeignet sind, im strömenden Medium von einer Dichte nämlichen Mediums abhängige Trägheitskräfte zu induzieren;
- einen mit dem wenigstens einen Meßrohr verbundenen, beispielsweise nämlich außen an dessen Rohrwand fixierten, Permanentmagneten;
- sowie eine erfindungsgemäße Spule, wobei nämliche Spule von einem Magnetfeld des Permanentmagneten durchflutet ist.

Zudem besteht die Erfindung auch in einem Meßsystem zum Messen wenigstens einer Meßgröße, insb. einer Temperatur, einer Dichte und/oder einer Viskosität, eines strömenden und eine Temperatur von mehr als 350°C, insb. mehr als 400°C, aufweisenden Fluids, insb. eines Gases, einer Flüssigkeit oder einer fließfähigen Dispersion, welches Meßsystem eine, insb. mittels eines Mikroprozessors gebildete, Meß- und Betriebs-Elektronik sowie, zum Führen des Mediums, einen erfindungsgemäßen Meßwandler umfaßt.

Nach einer ersten Ausgestaltung der erfindungsgemäßen Spule ist vorgesehen, daß sowohl ein, insb. entlang einer ersten Mantellinie des Spulenträgers geführter, erster Teilabschnitt des Spulen-Drahtes als auch ein davon beabstandeter, insb. entlang einer von der ersten Mantellinie beabstandeten zweiten Mantellinie des Spulenträgers geführter, zweiter Teilabschnitt des Spulen-Drahtes jeweils mittels eines auf den jeweiligen Teilabschnitt sowie einen Teilabschnitt des Spulenträgers applizierten, beispielsweise 1-komponentigen oder 2-komponentigen, Keramikklebers am Spulenträger fixiert ist.

Nach einer zweiten Ausgestaltung der erfindungsgemäßen Spule ist vorgesehen, daß deren Spulenträger zumindest anteilig, beispielsweise überwiegend oder vollständig, aus einem, beispielsweise Zirconiumoxid (ZrO₂) enthaltenden, keramischen Material, beispielsweise einer ZrO₂ Y-stabilisierten Keramik, besteht.

Nach einer dritten Ausgestaltung der erfindungsgemäßen Spule ist vorgesehen, daß die den um den Spulenträger gewickelten Spulen-Draht zumindest teilweise abdeckende Schutzschicht überwiegend oder vollständig aus keramischem Material besteht.

Nach einer vierten Ausgestaltung der erfindungsgemäßen Spule ist vorgesehen, daß der Spulen-Draht mehrlagig um den Spulenträger gewickelt ist.

Nach einer fünften Ausgestaltung der erfindungsgemäßen Spule ist vorgesehen, daß die den um den Spulenträger gewickelten Spulen-Draht zumindest teilweise abdeckende Schutzschicht überwiegend oder vollständig aus Glasbesteht.

Nach einer sechsten Ausgestaltung der erfindungsgemäßen Spule ist vorgesehen, daß die Schutzschicht (13) Zinkoxid (ZnO), insb. mit einem Massenanteil von 3-12%, und/oder Bortrioxid (B₂O₃), insb. mit einem Massenanteil von 5-15m%, und/oder Aluminiumoxid (Al₂O₃), insb. mit einem Massenanteil von 1-5%, und/oder Wismutoxid (Bi₂O₃, insb. mit einem Massenanteil von 60-75%, enthält.

Nach einer siebenten Ausgestaltung der erfindungsgemäßen Spule ist vorgesehen, daß das Material der den um den Spulenträger gewickelten Spulen-Draht zumindest teilweise abdeckende Schutzschicht konform zur EU-Richtlinie 2011/65/EU (ROHS 2) ist und/oder die CAS-Registrierungsnummer 65997-17-3 aufweist

Nach einer achten Ausgestaltung der erfindungsgemäßen Spule ist vorgesehen, daß die Schutzschicht den um den Spulenträger gewickelten Spulen-Draht überwiegend oder vollständig abdeckt.

Nach einer neunten Ausgestaltung der erfindungsgemäßen Spule ist vorgesehen, daß der Spulenträger kreiszylindrisch ist und/oder zumindest anteilig aus Keramik besteht.

Nach einer zehnten Ausgestaltung der erfindungsgemäßen Spule ist vorgesehen, daß der Spulen-Draht einen Drahtdurchmesser von weniger als 0,5 mm und/oder nicht weniger als 0,05 mm aufweist.

Nach einer elften Ausgestaltung der erfindungsgemäßen Spule ist vorgesehen, daß der Spulen-Draht überwiegend oder vollständig aus Silber besteht.

Nach einer zwölften Ausgestaltung der erfindungsgemäßen Spule ist vorgesehen, daß der Spulen-Draht zumindest anteilig aus Feinsilber besteht.

Nach einer dreizehnten Ausgestaltung der erfindungsgemäßen Spule ist vorgesehen, daß der Spulen-Draht zumindest anteilig aus AgNiO 15 besteht.

Ein Grundgedanke der Erfindung besteht darin, die Temperaturbeständigkeit der Spule dadurch zu erhöhen, indem als Spulen-Draht ein von einer Hochtemperatur beständigen, gleichwohl flexiblen Isolierschicht aus keramischen Material ummantelter Draht aus Silber verwendet wird, und indem zusätzlich zu nämlicher Isolierschicht noch eine weitere, den Spulen-Draht zumindest teilweise abdeckende Schutzschicht aus einem keramischen Material bzw. einem Glas vorgesehen ist. Dadurch kann auf einfache Weise ein mechanisch fester, gleichwohl auch für hohe Betriebstemperaturen von über 350°C langzeitstabiler Verbund hergestellt werden.

Die Erfindung sowie weitere vorteilhafte Ausgestaltungen davon werden nachfolgend anhand von Ausführungsbeispielen näher erläutert, die in den Figuren der Zeichnung dargestellt sind. Gleiche Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet. Weitere vorteilhafte Ausgestaltungen oder Weiterbildungen, insb. auch Kombinationen zunächst nur einzeln erläuterter Teilaspekte der Erfindung, ergeben sich ferner aus den Figuren der Zeichnung wie auch den Unteransprüchen an sich. Im einzelnen zeigen:
- Fig. 1, 2, 3: in unterschiedlichen, teilweise auch zerlegten Ansichten ein Ausführungsbeispiel einer erfindungsgemäßen, beispielsweise als Bestandteil eines Meßwandlers vom Vibrationstyp bzw. eines damit gebildeten vibronischen Meßgeräts dienlichen, Spule;
- Fig. 4: ein weiteres Ausführungsbeispiel einer erfindungsgemäßen Spule; und
- Fig. 5: in einer geschnittenen Seitenansicht ein Meßrohr eines Meßwandlers vom Vibrationstyp mit einem daran befestigten Permanentmagneten und einer erfindungsgemäßen, mit dem Permanentmagneten interagierenden Spule.

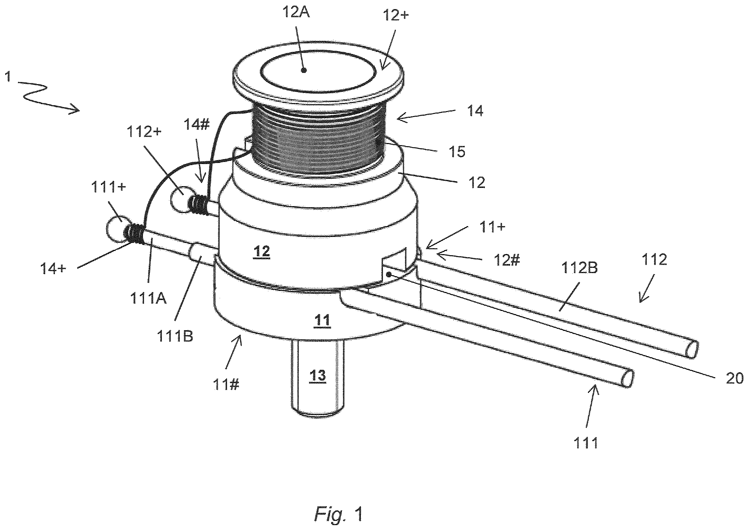

In den Fig. 1, 2 und 3 ist ein Ausführungsbeispiel einer erfindungsgemäßen, als Bestandteil eines Meßwandlers vom Vibrationstyp bzw. eines damit gebildeten vibronischen Meßsystems dienlichen, Spule 1 dargestellt. Die Spule ist als Hochtemperatur beständige, nämlich für Betriebstemperaturen von über 350°C, insb. auch von über 400°C, geeignete Spule ausgebildet.

Die Spule 1 umfaßt einen, beispielsweise kreiszylindrischen, Spulenträger 12 mit einem durch eine erste Stirnfläche gebildeten ersten Ende 12+ und einem zu nämlichem Ende 12+ distalen, durch eine, beispielsweise zu nämlicher ersten Stirnfläche parallele, zweite Stirnfläche gebildeten zweiten Ende 12#, sowie einen um den Spulenträger gewickelten Spulen-Draht 14. Der Spulen-Draht 14 kann beispielsweise einlagig um den Spulenträger gewickelt. Nach einer weiteren Ausgestaltung der Erfindung ist der Spulen-Draht mehrlagig, nämlich in zwei oder mehr übereinanderliegenden Lagen um den Spulenträger gewickelt. Der - hier kreiszylinderförmig - Spulenträger 12 wiederum kann beispielsweise aus einem metallischen Material, beispielsweise Stahl oder Titan bzw. einer Titan-Legierung, hergestellt sein. Als Material für den Spulenträger 12 kommt darüberhinaus beispielsweise aber auch Keramik in Frage. Dementsprechend ist nach einer weiteren Ausgestaltung der Erfindung vorgesehen, daß der Spulenträger 12 zumindest anteilig, beispielsweise nämlich überwiegend oder vollständig, aus einem keramischen Material, beispielsweise nämlich einer insb. Zirconiumoxid (ZrO₂) enthaltenden bzw. ZrO₂ Y-stabilisierten Keramik, besteht. Nach einer weiteren Ausgestaltung der Erfindung weist nämlicher Spulen-Draht 14 einen Drahtdurchmesser von weniger als 0,5 mm und/oder von nicht weniger als 0,05 mm auf. Nicht zuletzt für den Fall, daß der Spulendraht 14 lediglich einlagig auf den Spulenträger 12 gewickelt ist, können, wie auch in der eingangs erwähnten US-A 2006/0081069 vorgeschlagen, in den Spulenträger 12 auch ein Außengewinde zur Aufnahme des Spulendrahts 14 eingeformt und der Spulendraht in den Gewindegang nämlichen Außengewindes eingelegt sein.

Der Spulen-Draht 14 besteht erfindungsgemäß zumindest anteilig, insb. nämlich überwiegend oder vollständig, aus Silber, beispielsweise einem Feinsilber, oder einer Silber-Legierung, wie z.B. AgNiO 15. Darüberhinaus ist der Spulen-Draht 14 erfindungsgemäß zumindest teilweise von einer Isolierschicht 14a umhüllt. Nämliche, den Spulen-Draht umhüllende Isolierschicht 14a besteht zumindest anteilig, insb. nämlich überwiegend oder vollständig, aus einem, insb. Hochtemperatur beständigen, keramischen Material. Das keramische Material kann, beispielsweise Aluminiumoxid (Al₂O₃) und/oder Siliziumoxid (SiO₃) enthalten. Nach einer weiteren Ausgestaltung der Erfindung handelt es bei nämlichen Material bzw. der damit gebildeten Isolierschicht 14a um eine hochtemperaturbeständige, gleichwohl flexible Isolierung, beispielsweise eine solche bzw. von der Art wie sie von der Fa. California Fine Wire Grover Beach, CA unter der Warenbezeichnung Alcal "E" angeboten wird.

Der auf den Spulenträger 12 gewickelte Spulendraht 14 der erfindungsgemäßen Spule ist desweiteren mit einer Schutzschicht 15 aus einem, insb. elektrisch schlecht oder nicht leitenden, temperaturbeständigen Material überzogen, derart, daß der Spulen-Draht 14-wie auch in Fig. 1, 2 oder 3 dargestellt bzw. aus deren Zusammenschau ersichtlich - zumindest teilweise, insb. überwiegend oder vollständig, von nämlicher Schutzschicht 13 abgedeckt und/oder zumindest teilweise darin eingebettet ist. Die Schutzschicht 13 besteht zumindest anteilig, insb. nämlich überwiegend oder vollständig, aus einem, beispielsweise Zirconiumoxid (ZrO₂) enthaltenden, keramischen Material und/oder einem, beispielsweise Zinkoxid (ZnO) und/oder Bortrioxid (B₂O₃) und/oder Aluminiumoxid (Al₂O₃) und/oder Wismutoxid (Bi₂O₃) enthaltenden, Glas. Die Schutzschicht 15 kann vorteilhaft dadurch hergestellt sein, indem auf den bereits auf den Spulenträger 12 gewickelten Spulen-Draht 14 eine entsprechende Glas- bzw. Keramikpaste appliziert und hernach bei die den Spulen-Draht umhüllende Isolierschicht nicht wieder zerstörenden Brenntemperaturen gebrannt wird. Nach einer weiteren Ausgestaltung der Erfindung ist für die Schutzschicht ein der EU-Richtlinie 2011/65/EU (ROHS 2) konformes und/oder die CAS-Registrierungsnummer 65997-17-3 aufweisendes und/oder bei einer Brenntemperatur von weniger als 800°C herstellbares Material gewählt, beispielsweise ein ZnO mit einem Massenanteil von 3-12%, B₂O₃ mit einem Massenanteil von 5-15m%, Al₂O₃ mit einem Massenanteil von 1-5% und Bi₂O₃ mit einem Massenanteil von 60-75% enthaltendes Wismut-Aluminium-Silikat-Glas.

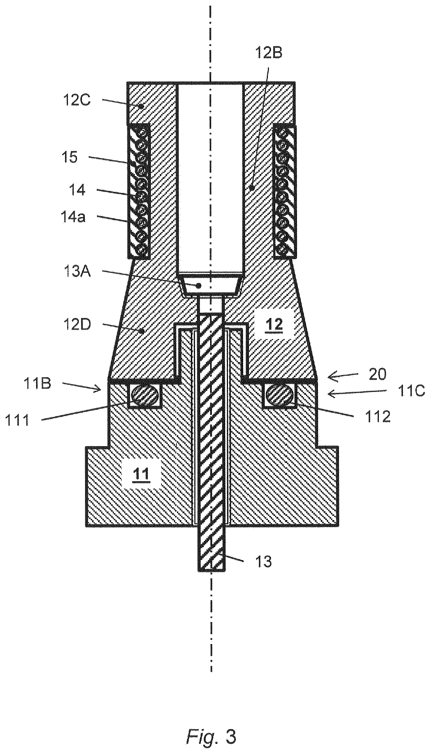

Nach einer weiteren Ausgestaltung der Erfindung weist die Spule ferner einen Grundkörper 11 mit einem durch eine erste Stirnfläche gebildeten ersten Ende 11+ und einem zu nämlichem Ende 11+ distalen, durch eine, beispielsweise zu nämlicher ersten Stirnfläche parallele, zweite Stirnfläche gebildeten zweiten Ende 11#, auf. Der - hier kreiszylinderförmig bzw. scheibenförmig ausgebildete - Grundkörper 11 kann beispielsweise gleichermaßen wie der Spulenträger aus einem metallischen Material, beispielsweise Stahl oder Titan bzw. einer Titan-Legierung, oder beispielsweise auch einer Keramik hergestellt sein. Grundkörper und Spulenträger sind hierbei u.a. dafür eingerichtet, mittels einer Schraube 13, beispielsweise auch wiederlösbar, miteinander mechanisch verbunden zu werden. Dafür weisen bei dieser Ausgestaltungsvariante der Grundkörper 11 eine sich von dessen Ende 11+ bis zu dessen Ende 11# erstreckende, beispielsweise gerade bzw. kreiszylindrische, Durchgangsöffnung 11A und der Spulenträger 12 eine sich von dessen Ende 12+ bis zu dessen Ende 12# erstreckende, beispielsweise gerade bzw. lediglich abschnittsweise kreiszylindrische, Durchgangsöffnung 12A auf. Desweiteren ist der Spulenträger 12 relativ zum Grundkörper 11 so angeordnet, daß die zweite Stirnfläche des Spulenträgers dem Grundkörper 11 - hier nämlich beispielsweise der ersten Stirnfläche des Grundkörpers 11 - zugewandt und die Durchgangsöffnung 12A des Spulenträgers 12 mit der Durchgangsöffnung 11A des Grundkörpers fluchte, und zwar derart, daß, wie aus der Zusammenschau der Fig. 1, 2 und 3 ohne weiteres ersichtlich, nämliche - beispielsweise als eine Senkkopfschraube ausgebildete - Schraube 13 so darin positionierbar ist, daß sie teilweise durch die Durchgangsöffnung 11A wie auch teilweise durch die Durchgangsöffnung 12A aufgenommen ist. Um ein Verschrauben der Spule 1 mit weiteren Anbauteile zu ermöglichen bzw. eine einfach zu hantierende Verbindungsmöglichkeit für die Spule 1 bereitzustellen, ist die Schraube 13 nach einer Ausgestaltung der Erfindung, abgestimmt auf die jeweilige Größe der beiden Durchgangsöffnungen 11A, 12A, so dimensioniert, daß sie sich über das das zweite Ende des Grundkörpers hinaus erstreckt, nachdem sie in den beiden Durchgangsöffnungen 11A, 12A positioniert ist. Zum Herstellen einer Grundkörper 11 und Spulenträger 12 aneinander fixierenden Schraubverbindung kann beispielsweise eine zusätzliche, gegen den Grundkörper 11 drückende Schraubenmutter dienen; die Schraubverbindung kann aber beispielsweise auch dadurch hergestellt werden, daß, wie auch in Fig. 3 schematisch angedeutet, eine die Durchgangsbohrung 11A des Grundkörpers 11 umhüllende Innenfläche des Grundkörpers 11 ein Innengewinde aufweist, das mit einem korrespondierenden Außengewinde der Schraube 13 im Eingriff ist.

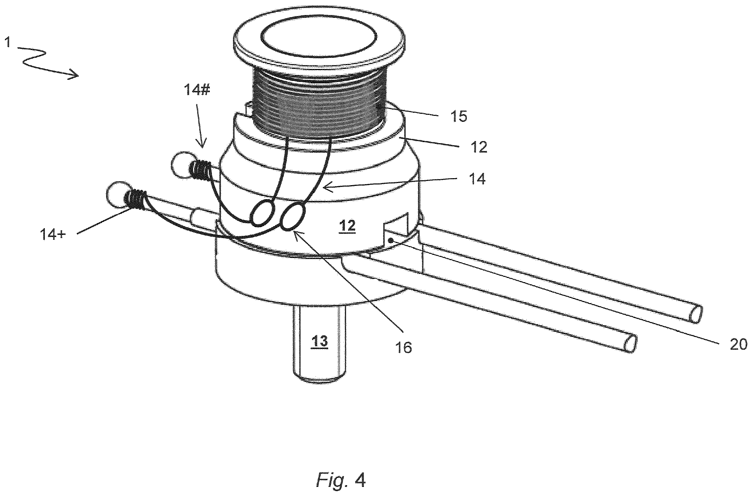

Nach einer weiteren Ausgestaltung der Erfindung ist - wie auch in Fig. 4 angedeutet - sowohl ein, beispielsweise auch entlang einer ersten gedachten Mantellinie des Spulenträgers 12 geführter, erster Teilabschnitt des Spulen-Drahtes 14 als auch ein davon beabstandeter, beispielsweise nämlich entlang einer von der vorbezeichneten Mantellinie beabstandeten zweiten gedachten Mantellinie des Spulenträgers 12 geführter, zweiter Teilabschnitt des Spulen-Drahtes 14 jeweils mittels eines auf den jeweiligen Teilabschnitt sowie einen Teilabschnitt des Spulenträgers applizierten, beispielsweise 1- oder auch 2-komponentigen, Keramikklebers 16 am Spulenträger 12 fixiert. Als Keramikkleber kann vorteilhaft beispielsweise ein solcher verwendet werden wie er von der Fa. Aremco Products Executive Blvd. Valley Cottage NY unter der Warenbezeichnung Cerambond 571 angeboten wird.

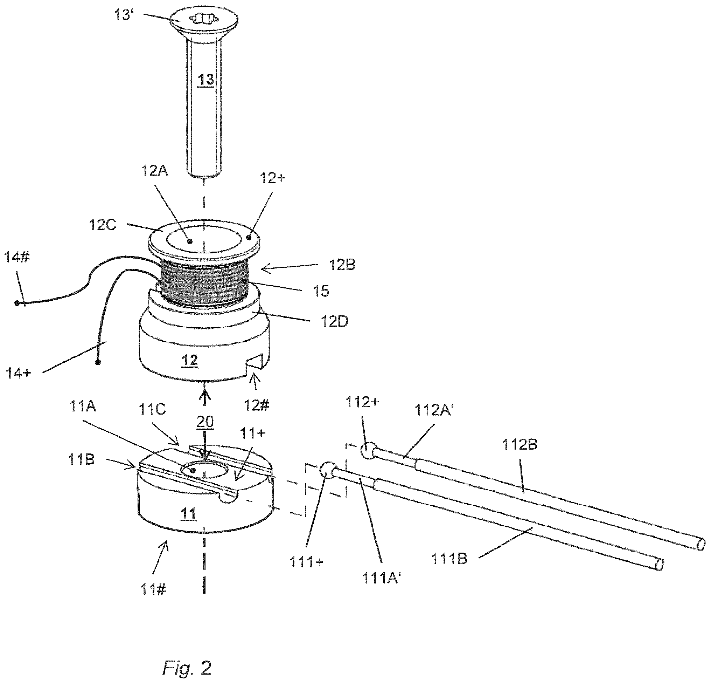

Zum elektrischen Verbinden mit einer davon räumlich entfernten - hier nicht dargestellten - elektronischen Schaltung, beispielsweise nämlich einer Elektronik eines vibronischen Meßgeräts, oder mit einem anderen elektrischen Bauteil weist die Spule 1 ferner eine erste Anschlußleitung 111 mit wenigstes einer Ader 111A aus elektrisch leitfähigem Material sowie wenigstens eine zweite Anschlußleitung 112 mit wenigstens einer Ader 112A aus elektrisch leitfähigem Material auf. Die Adern der Anschlußleitungen 111, 112 können beispielsweise aus dem gleichen Material bzw. beispielsweise jeweils aus Silber oder einer Silberlegierung oder Kupfer oder einer Kupferlegierung bestehen. Jede der Anschlußleitungen 111, 112 weist - wie auch aus einer Zusammenschau der Fig. 1 und 2 ohne weiteres ersichtlich - zudem eine die jeweilige Ader 111' bzw. 112' ummantelnde, beispielsweise schlauchartige, Isolation 111" bzw. 112" aus einem elektrisch nicht oder schlecht leitenden Material auf. Nicht zuletzt für den erwähnten Fall, daß die Spule 1 als Bestandteil eines Meßaufnehmers vom Vibrationstyp dienlich, mithin dafür vorgesehen ist, im Betrieb mechanischen Schwingungen ausgesetzt zu sein, weisen die Anschlußleitungen 111, 112 nach einer weiteren Ausgestaltung jeweils eine, beispielsweise mittels Glasfasern hergestellte, textile Isolation zum elektrischen Isolierung der Adern auf. Alternativ oder in Ergänzung dazu kann die Isolation aber beispielsweise auch mittels einer die jeweilige Ader ummantelnden homogenen Lackschicht oder einer Kunststoffhülle gebildet sein. Wie in Fig. 1 schematisch dargestellt, sind die Ader der Anschlußleitung 111 mit einem - selbstredend freiliegenden, nämlich nicht von einer Isolation umhüllten - ersten Ende 14+ des Spulen-Drahts und die Ader der Anschlußleitung 112 mit einem - gleichermaßen wie das erste Ende 14+ nicht von einer Isolation umhüllten - zweiten Ende 14+ des Spulen-Drahts elektrisch leitend verbunden, beispielsweise nämlich stoffschlüssig bzw. mittels einer Weich- oder einer Hartlotverbindung.

Bei der in den Fig. 1, 2, 3 bzw. 4 jeweils gezeigten Spule 1 kann ein konstruktionsbedingt zwischen der zweiten Stirnfläche des Spulenträgers und der ersten Stirnfläche des Grundkörpers ausgebildeter Zwischenraum 20 vorteilhaft auch dafür genutzt werden, die Anschlußleitungen 111, 112 zusätzlich zu fixieren, derart, daß eine die vorbezeichnete - nämlich zwischen der Ader der Anschlußleitung 111 und dem Ende 14+ des Spulen-Drahts bzw. der Ader der Anschlußleitung 112 und dem Ende 14# des Spulen-Drahts hergestellten - Verbindung zwischen den Anschlußleitungen 111, 112 und dem Spulendraht 14 bzw. auch den Spulendraht 14 an sich vor allfälligen Überbeanspruchungen, etwa infolge von auf die Anschlußleitungen einwirkenden Zug- oder auch Rüttelkräften, bzw. einer damit einhergehenden Zerstörung schützende Zugentlastung für die Anschlußleitungen 111, 112 bereitgestellt wird. Dementsprechend kann bei dieser Ausgestaltungsvariante der Spule 1 jede der wenigstens zwei Anschlußleitungen 111, 112 in Einbaulage jeweils anteilig in dem zwischen Spulenträger und Grundkörper gebildeten Zwischenraum 20 plaziert sein, um mittels eines daselbst und im Zusammenspiel mit Grundkörper, Spulenträger und Schraube gebildeten Kraftschlusses fixiert zu werden. Im in Fig. 1, 2, 3 bzw. 4 jeweils gezeigten Ausführungsbeispiel ist dafür mittels der Schraube 13 eine Schraubverbindung gebildet, die eine axiale, nämlich in Richtung einer gedachten Längsachse der Schraube wirkende Spannkraft auf den Spulenträger überträgt, etwa derart, daß Spulenträger und/oder Schraube im Ergebnis elastische Verformungen erfahren. Grundkörper 11, Spulenträger 12 zusammen mit den Anschlußleitungen 111, 112 können ferner dafür eingerichtet sein, im Zwischenraum 20 unter Ausnutzung von durch elastische Verformungen von Spulenträger bzw. Schraube generierten Rückstell- bzw. Spannkräften einen die Anschlußleitungen fixierenden Kraftschluß zu bewirken. Die Höhe der Spannkräfte bzw. der einer daraus resultierenden, die Anschlußleitung fixierenden Haftreibkraft kann mittels der Schraube bzw. durch ein zu deren Befestigung aufgewendetes Anzugsmoment entsprechend eingestellt werden. Nicht zuletzt bei Verwendung von Anschlußleitungen mit einer textilen Isolation für die jeweilige Ader kann es zudem von Vorteil sein, die Isolation sich zumindest bis in den Zwischenraum 20 hinein, idealerweise aber - wie in Fig. 1, 3 bzw. 4 jeweils angedeutet- auch geringfügig darüberhinaus erstrecken zu lassen, derart, daß innerhalb des Zwischenraums 20 verlegte Abschnitte jede der Adern 111', 112' von der jeweils zugehörigen Isolation 111" bzw.112" umhüllt sind. Dadurch können zum einen sehr hohe Haltekräfte für den die Anschlußleitungen 111, 112 fixierenden Kraftschluß erzielt und zum anderen auf sehr einfach, gleichwohl effektive Weise ein Zerspleißen oder Einreißen der Isolation verhindert, zumindest aber ein weiteres Ausbreiten allfälliger Einrisse in der Isolation sicher unterbunden werden.

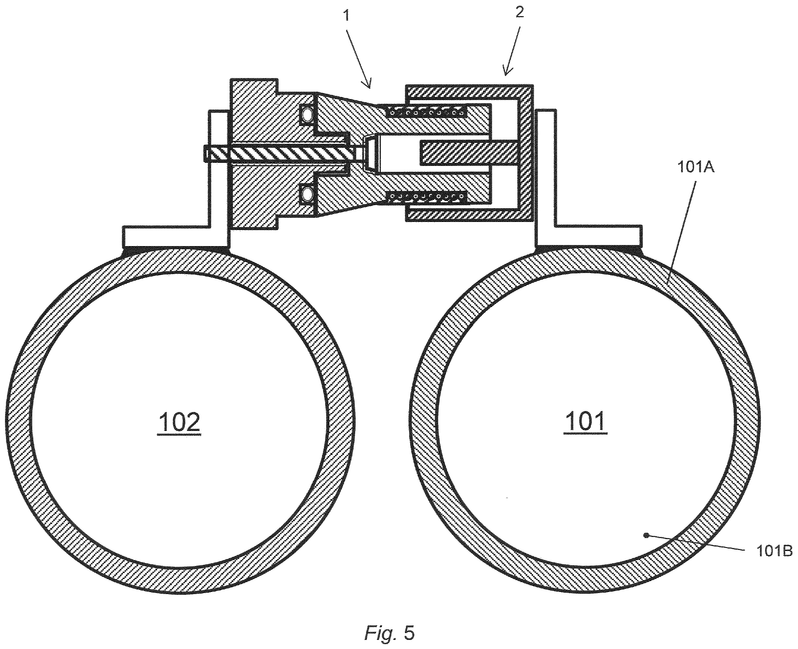

Wie bereits erwähnt ist die erfindungsgemäße Spule im besonderen auch dafür vorgesehen, als Bestandteil eines Meßwandler vom Vibrationstyp, beispielsweise nämlich eines Schwingungserregers oder eines Schwingungssensors, bzw. eines mittels eines solchen Meßwandlers gebildeten vibronischen Meßgeräts, beispielsweise einem Coriolis-Massendurchfluß-Meßgerät, einem Dichte-Meßgerät oder einem Viskositäts-Meßgerät zu dienen. Ein solcher Meßwandler weist, wie in Fig. 5 schematisch dargestellt wenigstens ein Meßrohr 101 mit einem von einer Rohrwand 101A umgebenen Lumen 101B. Das wenigstens eine - beispielsweise zumindest abschnittsweise gerade und/oder zumindest abschnittsweise gekrümmte - Meßrohr ist im besondern dafür eingerichtet, in dessen Lumen 101B ein fließfähiges bzw. zumindest zeitweise strömendes Medium, beispielsweise ein Gas oder ein Flüssigkeit, zu führen und währenddessen vibrieren gelassen zu werden, beispielsweise um das wenigstens eine Meßrohr mechanische Schwingungen um eine ihm zugehörige statische Ruhelage ausführen zu lassen, die geeignet sind, im strömenden Medium von einer Massendurchflußrate m abhängige Corioliskräfte zu induzieren, und/oder die geeignet sind, im strömenden Medium von einer Viskosität η nämlichen Mediums abhängige Reibungskräfte zu induzieren, und/oder die geeignet sind, im strömenden Medium von einer Dichte ρ nämlichen Mediums abhängige Trägheitskräfte zu induzieren. Im besonderen ist der Meßwandler auch für Anwendungen vorgesehen, bei denen das zu messende Medium zumindest zeitweise eine Temperatur von über 350°C, insb. nämlich mehr als 400°C, aufweist. Der Meßwandler weist ferner einen mit dem wenigstens einen Meßrohr 101 verbundenen - hier nämlich außen an dessen, beispielsweise aus einem Edelstahl, Titan, Tantal, Zirkonium oder einer Nickelbasislegierung bestehenden, Rohrwand 101A fixierten - Permanentmagneten 2 auf. Die Spule 2 ist wiederum so plaziert, daß sie von einem Magnetfeld des Permanentmagneten durchflutet ist. Beispielsweise kann die Spule 2, wie in Fig. 5 angedeutet, an einem, ggf. auch zum Meßrohr 101 baugleichen, weiteren Meßrohr oder aber auch - wie bei Meßwandlern vom Vibrationstyp mit einem einzigen Meßrohr durchaus üblich - an einem ggf. vorhandenen, betriebsgemäß nicht von einem zu messendem durchströmten Medium Gegenschwinger befestigt sein. Der Meßwandler kann - wie bereits angedeutet - ferner Bestandteil eines dem Messen wenigstens einer Meßgröße, beispielsweise einer Temperatur, einer Massendurchflußrate, einer Dichte und/oder einer Viskosität, eines strömenden und/oder eine Temperatur von mehr als 350°C, insb. mehr als 400°C, aufweisenden Fluids, insb. eines Gases, einer Flüssigkeit oder einer fließfähigen Dispersion, dienlichen (vibronischen) Meßsystems sein, das außerdem eine mit nämlichem Meßwandler, insb. nämlich dessen Spule(n) elektrisch verbundene und/oder mittels eines Mikroprozessors gebildete, Meß- und Betriebs-Elektronik umfaßt.

## Patentansprüche

1. Spule (1), ausgeführt für einen Meßwandler vom Vibrationstyp, zur Verwendung für eine oberhalb von 350°C liegende Betriebstemperatur, welche Spule umfaßt:
- einen, insb. kreiszylindrischen und/oder zumindest anteilig aus Keramik bestehenden, Spulenträger (12);
- einen zumindest teilweise von einer Isolierschicht (14a) umhüllten und um den Spulenträger (12) gewickelten, insb. einen Drahtdurchmesser von weniger als 0,5 mm und/oder nicht weniger als 0,05 mm aufweisenden, Spulen-Draht (14);
- sowie eine den von der Isolierschicht (14a) umhüllten und um den Spulenträger (12), insb. mehrlagig, gewickelten Spulen-Draht (14) zumindest teilweise, insb. überwiegend oder vollständig, abdeckende Schutzschicht (15);
- wobei der Spulen-Draht (14) zumindest anteilig, insb. überwiegend oder vollständig, aus Silber, insb. Feinsilber, oder einer Silber-Legierung, insb. AgNiO 15, besteht; **dadurch gekennzeichnet, dass**
die den Spulen-Draht umhüllende Isolierschicht (14a) zumindest anteilig, insb. nämlich überwiegend oder vollständig, aus einem, insb. Aluminiumoxid (Al₂O₃) enthaltenden und/oder Siliziumoxid (SiO₃) enthaltenden, keramischen Material besteht;
- und dass die Schutzschicht (15) zumindest anteilig, insb. nämlich überwiegend oder vollständig, aus einem, insb. Zirconiumoxid (ZrO₂) enthaltenden und/oder der EU-Richtlinie 2011/65/EU (ROHS 2) konformen, keramischen Material und/oder einem, insb. der EU-Richtlinie 2011/65/EU (ROHS 2) konformen und/oder die CAS-Registrierungsnummer 65997-17-3 aufweisenden und/oder Bortrioxid (B₂O₃) und/oder Aluminiumoxid (Al₂O₃) und/oder Wismutoxid (Bi₂O₃) und/oder Zinkoxid (ZnO) enthaltenden, Glas besteht.

2. Spule gemäß vorherigen Anspruch, wobei sowohl ein, insb. entlang einer ersten Mantellinie des Spulenträgers geführter, erster Teilabschnitt des Spulen-Drahtes als auch ein davon beabstandeter, insb. entlang einer von der ersten Mantellinie beabstandeten zweiten Mantellinie des Spulenträgers geführter, zweiter Teilabschnitt des Spulen-Drahtes jeweils mittels eines auf den jeweiligen Teilabschnitt sowie einen Teilabschnitt des Spulenträgers applizierten, insb. 1-komponentigen oder 2-komponentigen, Keramikklebers (16) am Spulenträger (12) fixiert ist.

3. Spule gemäß einem der vorherigen Ansprüche, wobei der Spulenträger (12) zumindest anteilig, insb. überwiegend oder vollständig, aus einem, insb. Zirconiumoxid (ZrO₂) enthaltenden, keramischen Material, insb. einer ZrO₂ Y-stabilisierten Keramik, besteht.

4. Spule gemäß einem der vorherigen Ansprüche, wobei die Schutzschicht (13) Zinkoxid (ZnO), insb. mit einem Massenanteil von 3-12%, und/oder Bortrioxid (B₂O₃), insb. mit einem Massenanteil von 5-15m%, und/oder Aluminiumoxid (Al₂O₃), insb. mit einem Massenanteil von 1-5%, und/oder Wismutoxid (Bi₂O₃, insb. mit einem Massenanteil von 60-75%, enthält.

5. Meßwandler vom Vibrationstyp, umfassend:
- wenigstens ein, insb. zumindest abschnittsweise gerades und/oder zumindest abschnittsweise gekrümmtes, Meßrohr (101), das ein von einer Rohrwand umgebenes Lumen aufweist und dafür eingerichtet ist, in einem Lumen ein, insb. zumindest zeitweise eine Temperatur von mehr als 350 C aufweisendes, fließfähiges Medium, insb. eine Gas und/oder eine Flüssigkeit, zu führen und währenddessen vibrieren gelassen zu werden, insb. derart, daß nämliches Metallrohr mechanischen Schwingungen um eine diesem zugehörige statische Ruhelage ausführt, die geeignet sind, im strömenden Medium von einer Massendurchflußrate, m, abhängige Corioliskräfte zu induzieren, und/oder daß nämliches Metallrohr mechanischen Schwingungen um eine diesem zugehörige statische Ruhelage ausführt, die geeignet sind, im strömenden Medium von einer Viskosität, η, nämlichen Mediums abhängige Reibungskräfte zu induzieren, und/oder daß nämliches Metallrohr mechanischen Schwingungen um eine diesem zugehörige statische Ruhelage ausführt, die geeignet sind, im strömenden Medium von einer Dichte, p, nämlichen Mediums abhängige Trägheitskräfte zu induzieren;
- einen mit dem wenigstens einen Meßrohr verbundenen, insb. nämlich außen an dessen Rohrwand fixierten, Permanentmagneten;
- sowie eine Spule gemäß einem der vorherigen Ansprüche, wobei nämliche Spule von einem Magnetfeld des Permanentmagneten durchflutet ist.

6. Meßsystem zum Messen wenigstens einer Meßgröße, insb. einer Temperatur, einer Dichte und/oder einer Viskosität, eines strömenden und/oder eine Temperatur von mehr als 350°C, insb. mehr als 400°C, aufweisenden Fluids, insb. eines Gases, einer Flüssigkeit oder einer fließfähigen Dispersion, welches Meßsystem umfaßt:
- eine, insb. mittels eines Mikroprozessors gebildete, Meß- und Betriebs-Elektronik;
- sowie zum Führen des Mediums einen Meßwandler gemäß einem der vorherigen Ansprüche.

## Claims

1. Coil designed for a vibronic-type transducer, wherein said coil is designed to be used at an operating temperature above 350 °C, said coil comprising:
- a coil carrier (12), particularly circular cylindrical and/or at least partially made of ceram ic;
- a coil wire (14), particularly having a wire diameter of less than 0.5 mm and/or not less than 0.05 mm, wherein said wire is at least partially surrounded by an insulating layer (14a) and is wrapped around the coil carrier (12);
- and a protective layer (15) covering at least partially, particularly primarily or completely, the coil wire (14) wrapped around the coil carrier (12), particularly in multiple layers, and surrounded by the insulating layer (14a);
- wherein the coil wire (14) is made at least partially, particularly primarily or completely, from silver, particularly fine silver, or a silver alloy, particularly AgNiO 15;
**characterized in that**
- the insulating layer (14a) surrounding the coil wire is made at least partially, particularly primarily or completely, from a ceramic material particularly containing aluminum oxide (Al₂O₃) and/or silicone oxide (SiO₃);
- and **in that** the protective layer (15) is made at least partially, particularly primarily or completely, from a ceramic material particularly containing zirconium oxide (ZrO₂) and/or compliant with European Directive 2011/65/EU (ROHS 2), and/or a glass particularly compliant with European Directive 2011/65/EU (ROHS 2) and/or having the CAS registration number 65997-17-3 and/or containing boron trioxide (B₂O₃) and/or aluminum oxide (Al₂O₃) and/or de bismuth oxide (Bi₂O₃) and/or zinc oxide (ZnO).

2. Coil as claimed in the previous claim, wherein both a first subsection of the coil wire, guided particularly along a first surface line of the coil carrier, and a second subsection of the coil wire, spaced at a distance from the first subsection, guided particularly along a second surface line of the coil carrier and spaced at a distance from the first surface line, are attached to the coil carrier (12) using a ceramic adhesive (16), particularly with 1 component or 2 components, applied on the respective subsection and on a subsection of the coil carrier.

3. Coil as claimed in one of the previous claims, wherein the coil carrier (12) is made at least partially, particularly primarily or completely, from a ceramic material particularly containing zirconium oxide (ZrO₂), particularly a ZrO₂ Y-stabilized ceram ic.

4. Coil as claimed in one of the previous claims, wherein the protective layer (13) comprises zinc oxide (ZnO), particularly with a mass fraction of 3 to 12%, and/or boron trioxide (B₂O₃), particularly with a mass fraction of 5 to 15m%, and/or aluminum oxide (Al₂O₃), particularly with a mass fraction of 1 to 5%, and/or bismuth oxide (Bi₂O₃, particularly with a mass fraction of 60 to 75%.

5. Vibronic-type transmitter, comprising:
- at least a measuring tube (101), particularly at least partially straight and/or at least partially curved, wherein said measuring tube has an interior channel surrounded by a tube wall and wherein said measuring tube is designed to conduct a fluid medium in an interior channel - particularly a gas and/or a liquid, having at least temporarily a temperature of over 350 °C - and to be made to vibrate during this time, particularly in such a way that said metal tube performs mechanical vibrations around a static rest position associated with it, wherein said vibrations are suitable to induce Coriolis forces that depend on a mass flow rate, m, in the flowing medium and/or in such a way that said metal tube performs mechanical vibrations around a static rest position associated with it, wherein said vibrations are suitable to induce frictional forces in the flowing medium that depend on a viscosity, n, of said medium, and/or in such a way that said metal tube performs mechanical vibrations around a static rest position associated with it, wherein said vibrations are suitable to induce inertia forces in the flowing medium that depend on a density p, of said medium;
- a permanent magnet connected to the at least one measuring tube, particularly secured on the outside on the wall of said tube;
- and a coil as claimed in one of the previous claims, wherein a magnetic field of said permanent magnet passes through said coil.

6. Measuring system designed to measure at least one measured variable, particularly a temperature, a density and/or a viscosity, of a flowing fluid and/or having a temperature over 350 °C, particularly over 400 °C, particularly a gas, a liquid or a fluid dispersion, wherein said measuring system comprises:
- a measuring and operating electronics unit, particularly formed using a microprocessor;
- and a transducer, as claimed in one of the previous claims, to conduct the medium.

## Revendications

1. Bobine conçue pour un transducteur du type à vibrations, laquelle bobine est destinée à être utilisée à une température de fonctionnement supérieure à 350 °C, laquelle bobine comprend :
- un support de bobine (12), notamment cylindrique circulaire et/ou au moins partiellement en céramique ;
- un fil de bobine (14), notamment présentant un diamètre de fil inférieur à 0,5 mm et/ou non inférieur à 0,05 mm, lequel fil est au moins partiellement recouvert d'une couche isolante (14a) et enroulé autour du support de bobine (12) ;
- ainsi qu'une couche de protection (15) recouvrant au moins partiellement, notamment essentiellement ou complètement, le fil de bobine (14) enroulé autour du support de bobine (12), notamment en plusieurs couches, et enveloppé par la couche isolante (14a) ;
- le fil de bobine (14) étant constitué au moins partiellement, notamment essentiellement ou complètement, d'argent, notamment d'argent fin, ou d'un alliage d'argent, notamment d'AgNiO 15 ;
**caractérisé**
- **en ce que** la couche isolante (14a) enveloppant le fil de bobine est constituée au moins partiellement, notamment essentiellement ou complètement, d'un matériau céramique contenant notamment de l'oxyde d'aluminium (Al₂O₃) et/ou de l'oxyde de silicium (SiO₃) ;
- et **en ce que** la couche de protection (15) est constituée au moins partiellement, notamment essentiellement ou complètement, d'un matériau céramique contenant notamment de l'oxyde de zirconium (ZrO₂) et/ou conforme à la directive européenne 2011/65/UE (ROHS 2), et/ou d'un verre notamment conforme à la directive européenne 201 1/65/UE (ROHS 2) et/ou présentant le numéro d'enregistrement CAS 65997-17-3 et/ou contenant du trioxyde de bore (B₂O₃) et/ou de l'oxyde d'aluminium (Al₂O₃) et/ou de l'oxyde de bismuth (Bi₂O₃) et/ou de l'oxyde de zinc (ZnO).

2. Bobine selon la revendication précédente, pour laquelle aussi bien une première section partielle du fil de bobine, guidée notamment le long d'une première génératrice du support de bobine, qu'une deuxième section partielle du fil de bobine, espacée de la première section partielle, guidée notamment le long d'une deuxième génératrice du support de bobine, espacée de la première génératrice, sont respectivement fixées sur le support de bobine (12) au moyen d'une colle céramique (16), notamment à 1 composant ou à 2 composants, appliquée sur la section partielle respective ainsi que sur une section partielle du support de bobine.

3. Bobine selon l'une des revendications précédentes, pour laquelle le support de bobine (12) est constitué au moins partiellement, notamment essentiellement ou complètement, d'un matériau céramique contenant notamment de l'oxyde de zirconium (ZrO₂), notamment d'une céramique stabilisée à l'yttrium ZrO₂.

4. Bobine selon l'une des revendications précédentes, pour laquelle la couche de protection (13) comprend de l'oxyde de zinc (ZnO), notamment avec une fraction massique de 3 à 12 %, et/ou du trioxyde de bore (B₂O₃), notamment avec une fraction massique de 5 à 15 %, et/ou de l'oxyde d'aluminium (Al₂O₃), notamment avec une fraction massique de 1 à 5 %, et/ou de l'oxyde de bismuth (Bi₂O₃, notamment avec une fraction massique de 60 à 75 %.

5. Transmetteur du type à vibrations, comprenant :
- au moins un tube de mesure (101), notamment au moins partiellement droit et/ou au moins partiellement courbé, lequel tube de mesure présente un canal intérieur entouré d'une paroi tubulaire et lequel tube de mesure est conçu pour guider dans un canal intérieur un produit fluide - notamment un gaz et/ou un liquide, présentant au moins temporairement une température supérieure à 350 °C - et pour être mis en vibration pendant ce temps, notamment de telle sorte que ledit tube de mesure exécute des vibrations mécaniques autour d'une position de repos statique qui lui est associée, lesquelles vibrations sont aptes à induire dans le produit en écoulement des forces de Coriolis dépendant d'un débit massique, m, et/ou de telle sorte que ledit tube de mesure exécute des vibrations mécaniques autour d'une position de repos statique qui lui est associée, lesquelles vibrations sont aptes à induire dans le produit en écoulement des forces de frottement dépendant d'une viscosité, n, dudit produit, et/ou de telle sorte que ledit tube de mesure exécute des vibrations mécaniques autour d'une position de repos statique qui lui est associée, lesquelles vibrations sont aptes à induire dans ledit produit en écoulement des forces d'inertie dépendant d'une densité, p, dudit produit ;
- un aimant permanent relié à l'au moins un tube de mesure, notamment fixé à l'extérieur sur la paroi de ce tube ;
- ainsi qu'une bobine selon l'une des revendications précédentes, ladite bobine étant traversée par un champ magnétique de l'aimant permanent.

6. Système de mesure destiné à la mesure d'au moins une grandeur de mesure, notamment une température, une densité et/ou une viscosité, d'un fluide s'écoulant et/ou présentant une température supérieure à 350 °C, notamment supérieure à 400 °C, notamment un gaz, un liquide ou une dispersion fluide, lequel système de mesure comprend :
- une électronique de mesure et d'exploitation, constituée notamment d'un microprocesseur ;
- ainsi que, pour le guidage du produit, un transducteur selon l'une des revendications précédentes.
